Europäisches Patentamt

European Patent Office

Office européen des brevets

(11) Numéro de publication: **0 263 768 B1**

## FASCICULE DE BREVET EUROPEEN

(45) Date de publication de fascicule du brevet: **15.07.92**  (51) Int. Cl.⁵: **A01C 3/06**

(21) Numéro de dépôt: **87440049.2**

(22) Date de dépôt: **31.07.87**

(54) **Palette articulée pour dispositif d'épandage.**

(30) Priorité: **03.09.86 FR 8612459**

(43) Date de publication de la demande:
**13.04.88 Bulletin  88/15**

(45) Mention de la délivrance du brevet:
**15.07.92 Bulletin  92/29**

(84) Etats contractants désignés:
**AT BE CH DE LI LU NL**

(56) Documents cités:
**FR-A- 2 284 268**
**GB-A- 655 977**
**US-A- 3 136 556**
**US-A- 3 211 461**

(73) Titulaire: **Etablissements HEYWANG, S.A. en liquidation des biens, représentée par Maî-tre Patry, syndic**
**50 rue Edgar Heywang**
**Bourgheim F-67140 Barr(FR)**

(72) Inventeur: **Heywang, Claude**
**Bourgheim**
**F-67140 Barr(FR)**

(74) Mandataire: **Nuss, Pierre**
**10, rue Jacques Kablé**
**F-67000 Strasbourg(FR)**

Rank Xerox (UK) Business Services

## Description

La présente invention concerne le domaine des dispositifs d'épandage, et a pour objet une palette articulée destinée à être montée sur la face supérieure de la table de projection d'un tel dispositif.

Les dispositifs d'épandage sont destinés à épandre des produits divers, tels que du fumier, des fientes de poules sèches ou semi-liquides, des boues de station d'épuration, sèches ou semi-liquides, des résidus industriels, tels que écumes de sucrerie ou chaux, ou plus généralement tous produits pulvérulents. Ces dispositifs sont composés de deux étages et se montent à l'arrière d'une remorque classique, une porte étanche à ouverture par commande hydraulique, montée dans la caisse de la remorque permettant le transport des produits semi-liquides. L'ouverture progressive de la porte permet la canalisation du produit vers le dispositif d'épandage à deux étages. L'étage supérieur est constitué de deux démêleurs à axes horizontaux et parllèles qui émiettent le produit à l'intérieur d'un caisson dont la paroi arrière est relevable. Le produit émietté tombe sur une table d'épandage qui constitue l'étage inférieur. La table est plane et inclinée, de préférence de 12° vers le haut à l'arrière. Sur la face supérieure de cette table peuvent être montées, par exemple, quatre palettes de distribution pour les dispositifs d'épandage de grande largeur (de huit à douze mètres). Ces quatre palettes sont montées en ligne, l'axe de rotation étant perpendicularie à la surface de la table. La longueur des palettes est supérieure à l'entraxe de celles-ci et le montage sur leur axe est tel qu'elles ne peuvent venir en collision. Leur sens de rotation est inversé de l'une à l'autre. La partie frontale de la table est repliée vers le haut et le passage de l'extrémité des palettes s'effectue à environ deux centimètres de cette face.

Actuellement donc, les palettes étant rigides sur toute leur longueur, les risques de blocage sont nombreux. Par exemple, lorsque le produit à épandre contient des corps étrangers, tels que des cailloux, ceux-ci provoquent un blocage, au niveau du passage d'environ deux centimètres entre les palettes et la partie frontale de la table, ce qui entraîne des vrillages sur les embouts d'arbre des renvois d'angle commandant les palettes. En outre, lorsque les palettes sont mises en rotation, alors que les produits à épandre sont déjà sur la table d'épandage, le couple résistant opposé aux palettes étant très élevé, il absorbe la puissance et crée de très fortes contraintes sur les organes de transmission.

On connaît également, par US-A-3 136 556, un dispositif de distribution vers l'arrière de la remorque qui présente un axe horizontal à double fléaux réalisant un épandage d'une largeur sensiblement égale à celle du plateau de la remorque.

La présente invention a, en effet, pour objet une palette de distribution adaptée à être montée sur la face supérieure d'une table de projection constituant l'étage inférieur d'un dispositif d'épandage et présentant à chacune de ses deux extrémités longitudinales une plaque articulée, palette caractérisée en ce qu'elle est composée de deux cornières, fixées de manière connue, par exemple par soudage, sur un axe de rotation, chaque plaque étant reliée à l'extrémité de chacune des cornières, grâce à un moyen d'articulation, de telle manière que chaque axe d'articulation soit parallèle à l'axe de rotation des palettes et en ce que le moyen d'articulation est sous la forme de trois éléments dont l'un d'entre eux est au contact des deux autres, de telle sorte que ce moyen ne comporte que deux points de contact entre les trois éléments.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :

la figure 1 est une vue en perspective d'une table d'épandage munie de palettes conforme à l'invention ;

la figure 2 est une vue en élévation d'une palette conforme à l'invention, et

la figure 3 est une vue en plan d'une palette conforme à l'invention.

Conformément à l'invention, la palette 1 présente à chacune de ses deux extrémités longitudinales une plaque articulée 3.

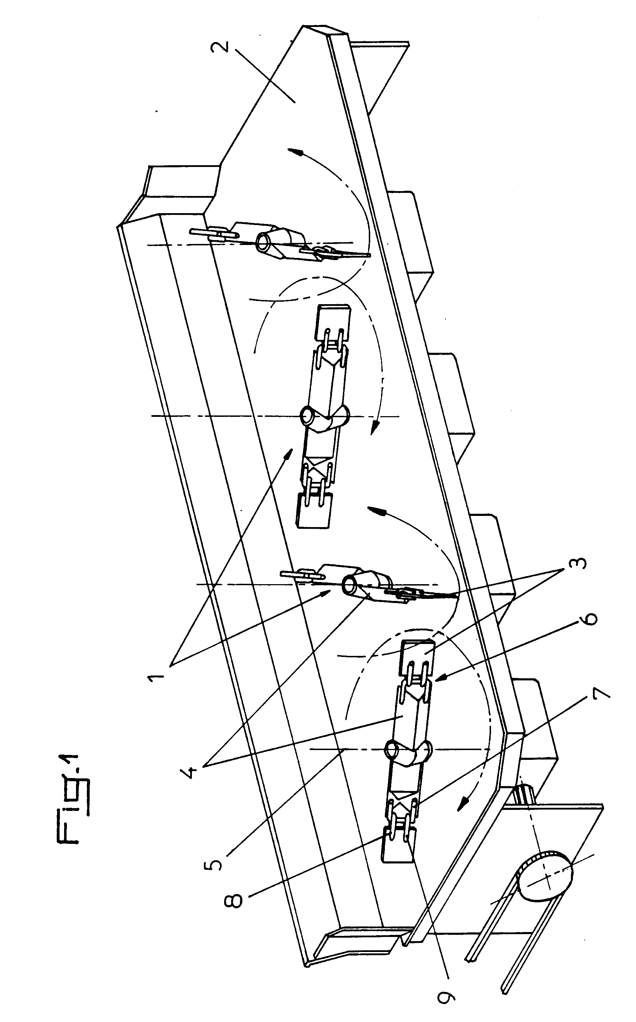

Comme on peut le voir sur la figure 1, elle est composée de deux cornières 4, fixée de manière connue, par exemple par soudage, sur un axe de rotation 5, chaque plaque 3 étant reliée à l'extrémité de chacune des cornières 4, grâce à un moyen d'articulation 6, de telle manière que chaque axe d'articulation 12 soit parallèle à l'axe de rotation des palettes 1.

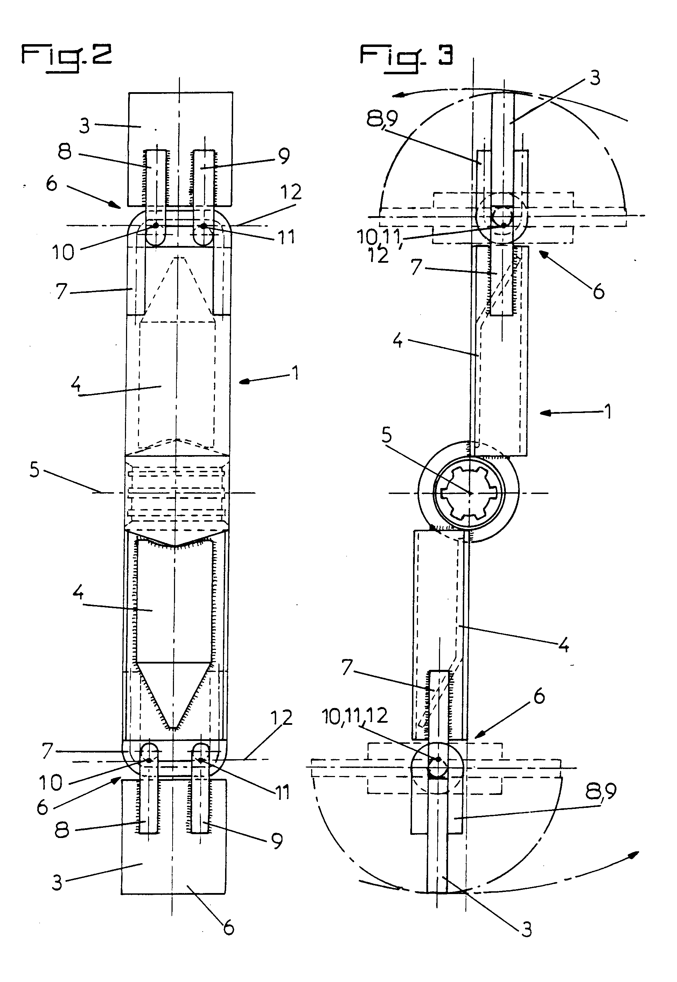

Selon une caractéristique de l'invention, le moyen d'articulation 6 est sous la forme de trois éléments 7, 8 et 9, dont l'un d'entre eux 7 est au contact des deux autres 8 et 9, de telle sorte que ce moyen 6 ne comporte que deux points de contact 10 et 11 entre les trois éléments 7, 8 et 9 (figure 2). Ainsi, les frottements sont réduits au minimum et la résistance lors de colmatage ou corrosion est diminuée, ce qui est primordial, les palettes 1 travaillant dans un milieu ambiant, tantôt humide, tantôt collant, tantôt agressif.

Chaque élément 7, 8 et 9 pourra être avantageusement sous la forme d'un étrier. L'étrier 7 est fixé à la cornière 4 de manière connue, par exemple par soudage, dans un plan vertical selon un axe longitudinal de l'étrier 7, les étriers 8 et 9 étant fixés, quant à eux, à la plaque articulée 3 de manière connue, par exemple par soudage, chacun dans un plan horizontal selon un axe longitudinal de l'étrier 7, et l'un 8 au-dessus de l'ature 9 (figures 2 et 3). Les deux étriers 8 et 9 et donc la plaque 3 sont ainsi maintenus à la palette 1 grâce à l'étrier 7 et la plaque 3 peut, de ce fait, effectuer une rotation d'un angle de 180° suivant un axe d'articulation vertical 12.

A chacune des deux extrémités d'une palette 1 se trouve, par conséquent, une plaque 3 mobile autour d'un axe d'articulation vertical 12 parllèle à l'axe de rotation de la palette 1. Ainsi, lors du démarrage, lorsque les palettes 1 sont entraînées en rotation sur une table d'épandage déjà bien remplie de produit, la face active des palettes 1 est moindre, le couple résistant opposé aux palettes 1 est peu élevé et les contraintes sont moindres sur les organes de transmission. De plus, lorsque les palettes ont atteint la vitesse de rotation choisie, les plaques articulées 3 s'étendent sous l'effet de la force centrifuge et confèrent à la palette 1 une longueur complète, les plaques 3 pouvant toutefois s'escamoter par rotation autour de l'axe d'articulation 12 en cas de résistance d'un obstacle, tel qu'un caillou ou un ature corps étranger coincé au niveau de passage d'environ deux centimètres entre la palette 1 et la partie frontale de la table.

Bien entendu, l'invention n'est pas limitée au mode de réalisation décrit et représenté aux dessins annexés.

**Revendications**

1.  Palette de distribution (1) adaptée à être montée sur la face supérieure d'une table de projection (2) constituant l'étage inférieur d'un dispositif d'épandage et présentant à chacune de ses deux extrémités longitudinales une plaque articulée (3), palette caractérisée en ce qu'elle est composée de deux cornières (4), fixées de manière connue, par exemple par soudage, sur un axe de rotation (5), chaque plaque (3) étant reliée a l'extrémité de chacune des cornières (4), grâce à un moyen d'articulation (6), de telle manière que chaque axe d'articulation (12) soit parallèle à l'axe de rotation des palettes (1) et en ce que le moyen d'articulation (6) est sous la forme de trois éléments (7, 8 et 9) dont l'un d'entre eux (7) est au contact des deux autres (8 et 9), de telle sorte que ce moyen (6) ne comporte que deux points de contact (10 et 11) entre les trois éléments (7, 8 et 9).

2.  Palette, selon la revendication 1, caractérisée en ce que chaque élément (7, 8 et 9) est sous la forme d'un étrier.

3.  Palette, selon la revendication 2, caractérisée en ce que l'étrier (7) est fixé à la cornière (4) de manière connue, par exemple par soudage, dans un plan vertical selon un axe longitudinal de l'étrier (7), les étriers (8 et 9) étant fixés, quant à eux, à la plaque articulée (3) de manière connue, par exemple par soudage, chacun dans un plan horizontal selon un axe longitudinal de l'étrier (7), et l'un (8) au-dessus de l'autre (9).

**Claims**

1.  Distributing blade (1) adapted to be mounted on the upper face of a projecting table (2) constituting the lower level of a spreading device and having, at each of its longitudinal ends, an articulated plate (3), the blade being characterised in that it is composed of two angle pieces (4) fixed in a known manner, for example by welding, to an axis of rotation (5), each plate (3) being connected to the end of each of the angle pieces (4) by means of an articulating means (6) such that each axis of articulation (12) is parallel to the axis of rotation of the blades (1) and in that the articulating means (6) is in the form of three elements (7, 8 and 9) of which one (7) is in contact with the other two (8 and 9) such that this means (6) comprises only two points of contact (10 and 11) between the three elements (7, 8 and 9).

2.  Blade according to claim 1, characterised in that each element (7, 8 and 9) is in the form of a stirrup.

3.  Blade according to claim 2, characterised in that the stirrup (7) is fixed to the angle piece (4) in a known manner, for example by welding, in a vertical plane along a longitudinal axis of the stirrup (7), the stirrups (8 and 9), in turn, being fixed to the articulated plate (3) in a known manner, for example by welding, each in a horizontal plane along a longitudinal axis of the stirrup (7), one (8) above the other (9).

**Patentansprüche**

1.  Verteilerschlegel (1) zum Einbau an der Oberseite eines die untere Stufe einer Streuvorrichtung bildenden Verteilertisches (2), an seinen beiden Längsenden mit jeweils einer schwenkbaren Platte (3) versehen, dadurch gekennzeichnet, daß er aus zwei Winkelprofilen (4) besteht, welche auf bekannte Weise, z.B. durch Schweißung, an einer drehbaren Welle (5) befestigt sind, wobei jede Platte (3) über eine Gelenkvorrichtung (6) mit dem Ende jedes der Winkelprofile (4) so verbunden ist, daß jede Gelenkachse (12) parallel sur Drehachse der Schlegel (1) verläuft, und dadurch gekennzeichnet, daß die Gelenkvorrichtung (6) in Form von drei Elementen (7, 8 und 9) vorliegt, von denen eines (7) mit den beiden anderen (8 und 9) so verbunden ist, daß diese Vorrichtung (6) nur zwei Berührungspunkte (10 und 11) zwischen den drei Elementen (7, 8 und 9) aufweist.

2. Schlegelnach Anspruch 1, dadurch gekennzeichnet, daß jedes der Elemente (7, 8 und 9) bügelförmig ausgebildet ist.

3. Schlegel nach Anspruch 2, dadurch gekennzeichnet, daß der Bügel (7) in bekannter Weise, z.B. durch Schweißung, in einer vertikalen Ebene gemäß der Längsachse des Bügels (7) an dem Winkelprofil (4) befestigt ist, wobei die Bügel (8 und 9) jeweils in bekannter Weise, z.B. durch Schweißung, in einer horisontalen Ebene gemäß einer Längsachse des Bügels (7) an der beweglichen Platte (3) so befestigt sind, daß ein Bügel (8) über dem anderen (9) liegt.

Fig.1

EP 0 263 768 B1

# Fig.2

# Fig. 3